# EUROPÄISCHE PATENTSCHRIFT

(11) **EP 3 516 256 B1**
(45) Veröffentlichungstag und Bekanntmachung des Hinweises auf die Patenterteilung: **09.12.2020**
(21) Anmeldenummer: 17767839.8
(22) Anmeldetag: 15.09.2017
(51) Int. Cl.: F16D 65/12

(54) **VERBUNDBREMSSCHEIBE**
COMPOSITE BRAKE DISC
DISQUE DE FREIN COMPOSITE

(30) Priorität: 19.09.2016 DE 102016117592
(43) Veröffentlichungstag der Anmeldung: 31.07.2019
(73) Patentinhaber: KNORR-BREMSE Systeme für Nutzfahrzeuge GmbH, 80809 München (DE)
(72) Erfinder: BAUMGARTNER, Johann, 85368 Moosburg (DE); FRICKE, Jens, 94474 Vilshofen (DE); HABERL-GÜNTHNER, Paul, 94474 Vilshofen (DE); KOCH, Werner, 73326 Deggingen (DE); KOTTEDER, Stephan, 94486 Osterhofen (DE); KRAUSS, Philipp, 80997 München (DE); PAHLE, Wolfgang, 83707 Bad Wiessee (DE); WERTH, Alexander, 80999 München (DE)
(86) Internationale Anmeldenummer: PCT/EP2017/073284
(87) Internationale Veröffentlichungsnummer: WO 2018/050821

(56) Entgegenhaltungen:
- EP-A2- 1 892 434
- DE-B- 1 200 339
- DE-B3- 10 312 954
- FR-A1- 3 001 015

## Beschreibung

Die vorliegende Erfindung betrifft eine Verbundbremsscheibe für eine Scheibenbremse eines Nutzfahrzeugs gemäß dem Oberbegriff des Anspruchs 1.

Gattungsgemäße Verbundbremsscheiben weisen einen Bremsscheibentopf und zwei mit diesem verbundene Reibringe auf. Die Reibringe bilden dabei ein Paar von wechselseitig entgegengesetzten Bremsflächen, an die Bremsbeläge einer Scheibenbremse bei einem Bremsvorgang angedrückt werden. Zur Abführung der beim Bremsvorgang entstehenden Reibungswärme sind zwischen den Reibringen Strömungskanäle zur Innenbelüftung der Reibringe vorgesehen.

Die Anbindung des Bremsscheibentopfes an die Reibringe erfolgt dabei beispielsweise über Laschen, die am Bremsscheibentopf angeformt sind, die, wie in der DE 10125113 A1, der FR 3 001 015 A1 oder der DE 12 00 339 B beschrieben, sich radial zu den Reibringen hin erstrecken und abwechselnd am inneren bzw. äußeren Reibring befestigt, beispielsweise verklebt, verschweisst, verlötet oder angegossen sind.

Durch die Verbindung der Laschen mit den Reibringen kann es insbesondere aufgrund der unterschiedlichen Ausdehnungskoeffizienten der unterschiedlichen Materialien zu einer Schirmung der Verbundbremsscheibe kommen. Durch die Schirmung können bei einem Bremsvorgang sogenannte Hotspots entstehen, wodurch eine vermehrte Hitzerissbildung der Reibringe auftreten kann.

Weiter ist aus der EP 1 892 434 A2 eine flexibel an einer Nabe angebrachte Bremsscheibe bekannt, bei der zur Vermeidung von Spannungen sich von einem radial inneren Rand eines der Reibringe im Querschnitt u-förmig geformte Laschen erstrecken, die mit der Nabe verschraubt sind.

Aufgabe der vorliegenden Erfindung ist es, eine Verbundbremsscheibe der gattungsgemäßen Art derart weiterzuentwickeln, dass die Anbindung zwischen den Reibringen und einem topfförmigen Anschlusselement weiter verbessert wird, wobei insbesondere eine Schirmung der Reibringe infolge der Erwärmung der Reibringe vermieden werden soll.

Diese Aufgabe wird durch eine Verbundbremsscheibe mit den Merkmalen des Anspruchs 1 gelöst.

Die erfindungsgemäße Verbundbremsscheibe für eine Scheibenbremse eines Nutzfahrzeugs weist zwei Reibringe auf sowie wenigstens ein sich von einem inneren Umfang der Reibringe axial zu einer Drehachse der Verbundbremsscheibe erstreckendes, topf- oder halsförmiges Anschlusselement zur Befestigung der Verbundbremsscheibe an einer Radachse.

Das Anschlusselement weist dabei eine Mantelfläche auf, von deren einen stirnseitigen Rand sich eine Vielzahl von ersten und zweiten Laschen erstrecken, deren Enden in den Reibringen alternierend aufgenommen sind. Die Enden der ersten Laschen sind dabei in einen der Mantelfläche des Anschlusselements nahen ersten Reibring eingegossen, während die Enden der zweiten Laschen in einen der Mantelfläche des Anschlusselements entfernten zweiten Reibring eingegossen sind.

Die Laschen erstrecken sich axial zur Drehachse der Verbundbremsscheibe von der Mantelfläche des Anschlusselements weg. Die ersten Laschen weisen dabei in einem Bereich zwischen der Mantelfläche des Anschlusselements und den in dem Reibring aufgenommenen Enden eine u-förmige Biegung auf.

Zumindest ein Teil der ersten und zweiten Laschen sind mit wenigstens einer Sicke versehen.

Durch das Eingießen der Laschen in die Reibringe ist eine einfach durchzuführende Verbindung zwischen dem Anschlusselement und den Reibringen ermöglicht. Durch die sich axial durch Drehachse der Verbundbremsscheibe auf einer Mantelfläche des Anschlusselements wegstreckenden Laschen ist die Möglichkeit gegeben, die Steifigkeit der Verbindung so anzupassen, dass sich gegebenenfalls entstehende Verspannungen infolge der Erwärmung der Reibringe so ausgleichbar sind, dass eine Schirmung vermieden wird.

Insbesondere die Ausbildung der ersten Laschen mit einer u-förmigen Biegung hat den Vorteil, dass dadurch diese Laschen eine größere Längserstreckung als die aus dem Stand der Technik bekannten Stege aufweisen und dadurch auch hier eine Anpassung der Steifigkeit der Verbindung ermöglicht ist.

Durch die Anbringung einer solchen Sicke in einen Teil der Laschen ist eine Anpassung der Steifigkeit ermöglicht.

Vorteilhafte Ausführungsvarianten der Erfindung sind Gegenstand der Unteransprüche.

Die Sicke ist bevorzugt in einem sich axial zur Drehachse der Verbundbremsscheibe erstreckenden Bereich der Lasche eingebracht. In diesem Bereich der Lasche ist eine größere Steifigkeit der Verbindung zwischen Anschlusselement und Reibringen besonders vorteilhaft. Die durch Erwärmung erfolgende radiale Aufweitung der Reibringe kann dabei durch die sich an den axialen Teil der Laschen anschließenden Teil der Laschen ausgeglichen werden.

Besonders bevorzugt erstreckt sich die Sicke von der Mantelfläche des Anschlusselements in einem sich axial zur Drehachse der Verbundbremsscheibe erstreckenden Bereich der Lasche.

Die Sicken sind bevorzugt in den zweiten Laschen eingebracht, die mit dem der Mantelfläche des Anschlusselements fernen zweiten Reibring verbunden sind.

Die Sicken sind bevorzugt als im Querschnitt teilkreisförmige Auswölbung ausgebildet und bewirken so eine Versteifung der Laschen axial zur Drehachse der Verbundbremsscheibe.

Gemäß einer vorteilhaften Ausführungsvariante der Erfindung sind die Enden der Laschen sich radial zur Drehachse der Verbundbremsscheibe erstreckend in die Reibringe eingegossen.

Besonders bevorzugt stehen die Enden der Laschen um mehr als 50 % der radialen Breite der Reibringe in die Reibringe vor.

Gemäß einer alternativen Ausführungsvariante sind die Enden der Laschen sich axial zur Drehachse der Verbundbremsscheibe erstreckend in die Reibringe eingegossen.

Besonders bevorzugt sind zur Anbindung der Laschen an die Reibringe Flanschteile vorgesehen, die aus dem Innenumfang der Reibringe radial zur Drehachse vorstehen. Diese Flanschteile sind besonders bevorzugt in Form von mehreren abständig voneinander angeordneten Zähnen ausgebildet.

Zur Verbesserung der Belüftung der Verbundbremsscheibe sind gemäß einer weiteren bevorzugten Ausführungsvariante der Erfindung an zumindest einer der Laschen eine sich in Umfangsrichtung des Mantelfläche des Anschlusselements erstreckende Strömungslasche angeordnet, insbesondere angeformt, wobei der Krümmungsradius der Strömungslasche größer ist als der Krümmungsradius des Mantelfläche des Anschlusselements.

Mithilfe dieser Strömungslaschen wird bei Drehung der Verbundbremsscheibe die die Verbundbremsscheibe umströmende Luft stärker in den Innenraum zwischen den Reibringen geleitet.

Die Strömungslaschen sind dabei bevorzugt an den zweiten Laschen angeordnet.

Nachfolgend werden bevorzugte Ausführungsbeispiele der Erfindung anhand der beiliegenden Zeichnungen näher erläutert. Es zeigen:
- Fig. 1: eine perspektivische Ansicht einer ersten Ausführungsvariante einer erfindungsgemäßen Verbundbremsscheibe,
- Fig. 2: eine weitere perspektivische Ansicht der in Fig. 1 gezeigten Verbundbremsscheibe,
- Fig. 3: eine Draufsicht auf das Anschlusselement der in Fig. 1 gezeigten Verbundbremsscheibe,
- Fig. 4: eine perspektivische Ansicht des in Fig. 3 gezeigten Anschlusselements,
- Fig. 5: eine Ausschnittsvergrößerung des in Fig. 4 gezeigten Anschlusselements,
- Fig. 6: eine weitere perspektivische Darstellung des in Fig. 4 gezeigten Anschlusselements,
- Fig. 7: eine Ausschnittsvergrößerung des in Fig. 6 gezeigten Anschlusselements zur Darstellung der Sicken,
- Fig. 8: eine weitere perspektivische Darstellung des in Fig. 4 gezeigten Anschlusselements,
- Fig. 9: eine alternative Ausführungsvariante einer erfindungsgemäßen Verbundbremsscheibe,
- Fig. 10 und 11: perspektivische Darstellungen des Anschlusselements der in Fig. 9 gezeigten Verbundbremsscheibe,
- Fig. 12 und 13: Seitenansichten von Ausschnitten der in Fig. 9 gezeigten Verbundbremsscheibe zur Darstellung der axial in einem jeweiligen Reibring aufgenommenen Laschenenden.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Verbundbremsscheibe, des Anschlusselements, der Laschen, der Reibringe und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

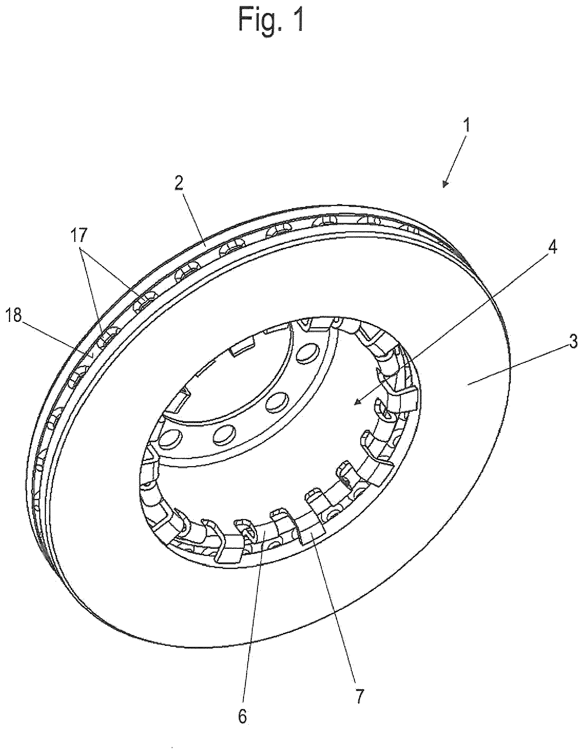

In **Fig. 1** ist mit dem Bezugszeichen 1 insgesamt eine Ausführungsvariante einer erfindungsgemäßen Verbundbremsscheibe bezeichnet. Die Verbundbremsscheibe 1 weist zwei parallel und abständig zueinander angeordnete Reibringe 2, 3 auf, die durch eine Vielzahl von Rippen 17 miteinander verbunden sind. Zwischen den Rippen 17 sind Lüftungskanäle 18 vorgesehen, die der Innenbelüftung der Reibringe 2, 3 dienen.

Zur Verbindung der Reibringe 2, 3 mit einer Radachse des Nutzfahrzeuges (nicht gezeigt) ist ein sich von einem inneren Umfang der Reibringe 2, 3 axial zu einer Drehachse A der Verbundbremsscheibe 1 erstreckendes, topfförmiges Anschlusselement 4 vorgesehen. Denkbar ist auch, das Anschlusselement 4 halsförmig auszubilden, je nach Anschlussmöglichkeit an einer Radachse des Nutzfahrzeuges. Dieses Anschlusselement 4 weist eine bevorzugt zylindrische Mantelfläche 5 auf, von deren stirnseitigen Rand sich eine Vielzahl von ersten und zweiten Laschen 6, 7 erstrecken, deren Enden 8, 9 in den Reibringen 2, 3 alternierend aufgenommen sind. Die zylindrische Mantelfläche 5 kann dabei glatt mit konstantem Durchmesser ausgebildet sein. Denkbar ist auch, die Mantelfläche 5 konisch oder stufig mit variierendem Durchmesser auszubilden.

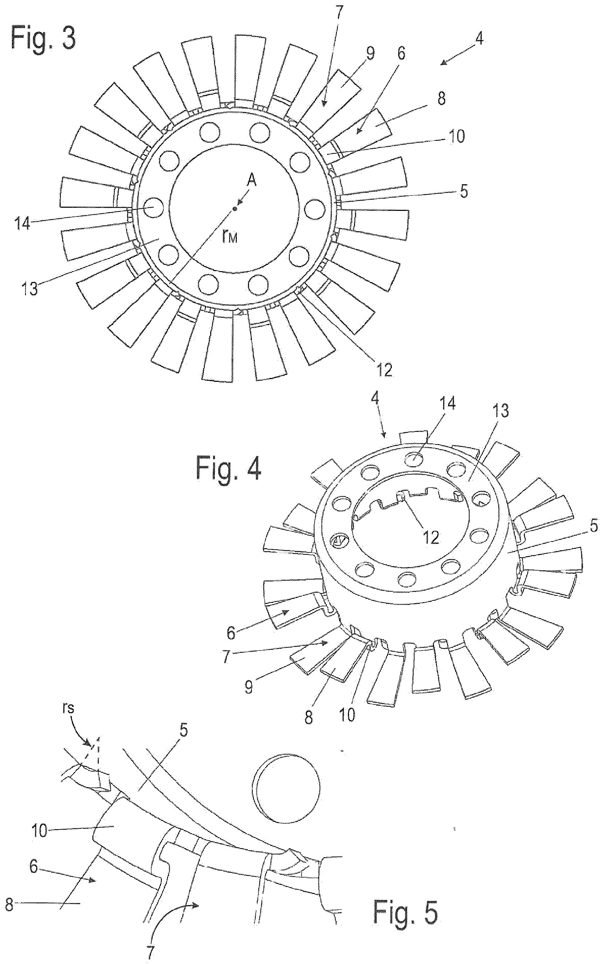

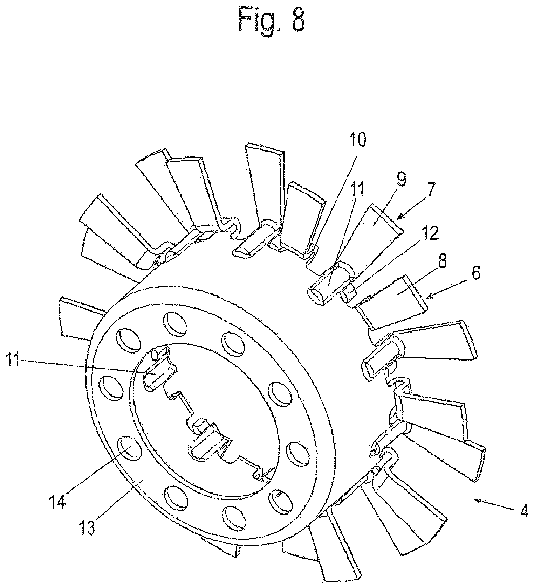

Eine bevorzugte Ausführungsvariante eines solchen Anschlusselements 4 ist in den **Fig. 3 - 8** dargestellt. Das Anschlusselement 4 ist dabei bevorzugt aus einem Metallblech geformt. Die Reibringe 2, 3 sind bevorzugt aus Grauguss geformt, denkbar ist aber auch die Formung der Reibringe 2, 3 aus einem anderen Metallguss, beispielsweise einem Aluminiumguss.

Das Anschlusselement 4 weist an dem den Laschen 6, 7 gegenüberliegenden stirnseitigen Rand der Mantelfläche 5 einen Flansch 13 mit Aufnahmeöffnungen 14 zur Befestigung an einer Radachse auf.

Die Laschen 6, 7 des Anschlusselements 4 sind bei der in den Fig. 1-8 gezeigten Ausführungsvariante so ausgerichtet, dass sie sich zunächst in axialer Richtung vom stirnseitigen Rand der Mantelfläche 5 weg erstrecken und die jeweiligen Enden 8, 9 der Laschen 6, 7 sich radial zur Mantelfläche 5 des Anschlusselements 4 nach außen erstrecken.

Dabei sind die Enden 8 der ersten Laschen 6 in einen der zylindrischen Mantelfläche 5 des Anschlusselements 4 nahen ersten Reibring 2 eingegossen. Die Enden 9 der zweiten Laschen 7 sind in einem der zylindrischen Mantelfläche 5 des Anschlusselements 4 entfernten zweiten Reibring 3 eingegossen.

Zur Anpassung der Steifigkeit der Verbindung zwischen den Reibringen 2, 3 und dem Anschlusselement 4 sind die ersten Laschen 6 so geformt, dass sie nicht direkt von der Mantelfläche 5 in Richtung des des Anschlusselements 4 nahen ersten Reibrings 2 gebogen sind, sondern in einem Bereich zwischen der Mantelfläche 5 des Anschlusselements 4 und dem in dem Reibring 2 aufgenommenen Ende 8 eine u-förmige Biegung 10 aufweisen, wie es beispielsweise in den Fig. 4 und 5 deutlich zu erkennen ist.

Zur weiteren Verbesserung der Durchlüftung der Verbundbremsscheibe 1 ist, wie in den Fig. 3-8 des Weiteren gut erkennbar ist, an den Laschen 7 seitlich eine sich in Umfangsrichtung der Mantelfläche 5 des Anschlusselements 4 erstreckende Strömungslasche 12 angeordnet, insbesondere angeformt. Der Krümmungsradius r_{S} der Strömungslasche 12 ist dabei größer als der Krümmungsradius r_{M} der Mantelfläche 5 des Anschlusselements 4, wodurch eine Verbesserung der Luftdurchströmung der Lüftungskanäle 18 erreicht wird.

Neben der in den Fig. 3-8 gezeigten Ausführungsvariante, bei der die Strömungslaschen 12 an jeder der zweiten Laschen 7 angeformt sind, ist es selbstverständlich auch denkbar, nur einen Teil der zweiten Laschen 7 mit solchen Strömungslaschen 12 auszubilden. Denkbar ist auch, solche Strömungslaschen 12 an einer oder mehrerer der ersten Laschen 6 anzuformen.

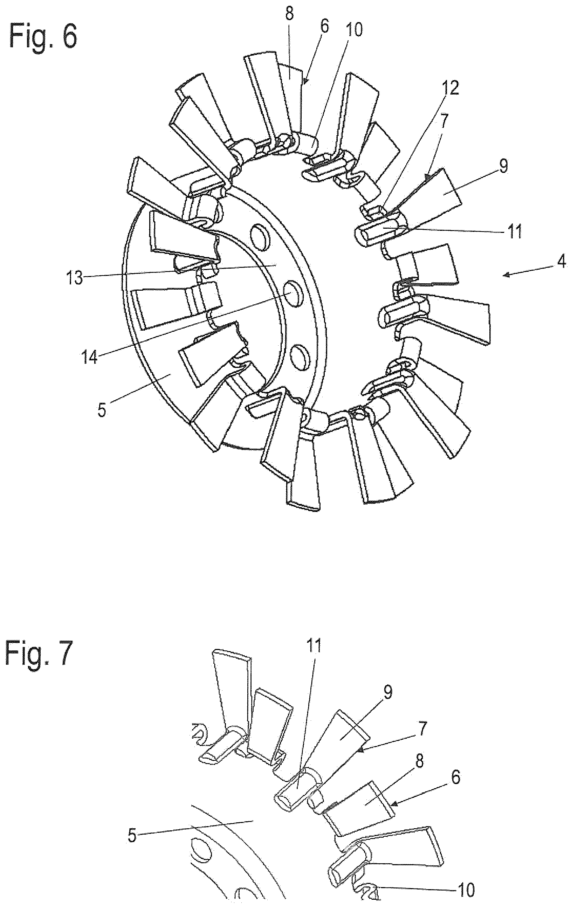

Wie insbesondere in den Fig. 6-8 gezeigt ist, ist zumindest ein Teil der ersten und zweiten Laschen 6, 7 mit wenigstens einer Sicke 11 versehen. Bei der in den Fig. 6-8 gezeigten Ausführungsvariante sind die zweiten Laschen 7 mit Sicken 11 versehen.

Die Sicke 11 ist in einem sich axial zur Drehachse A der Verbundbremsscheibe 1 erstreckenden Bereich der Lasche 7 eingebracht. Die Sicke 11 erstreckt sich von dem sich zungenartig von der Mantelfläche 5 des Anschlusselements 4 erstreckenden axialen Bereich bis in die Mantelfläche 5 des Anschlusselements 4.

In der in den Fig. 6 bis 8 gezeigten Ausführungsvariante ist die Sicke 11 als im Querschnitt teilkreisförmige Auswölbung ausgebildet. Die Längserstreckung der Sicke 11 erfolgt dabei in axialer Richtung zur Drehachse A der Verbundbremsscheibe 1. Die Auswölbung der Sicke 11 ist so ausgeführt, dass die Sicke 11 radial nach außen aus dem Blech des Anschlusselements 4 vorsteht. Denkbar sind selbstverständlich auch andere Formgestaltungen einer solchen Sicke 11, je nach Anforderung an die Steifigkeit der jeweiligen Lasche 6, 7.

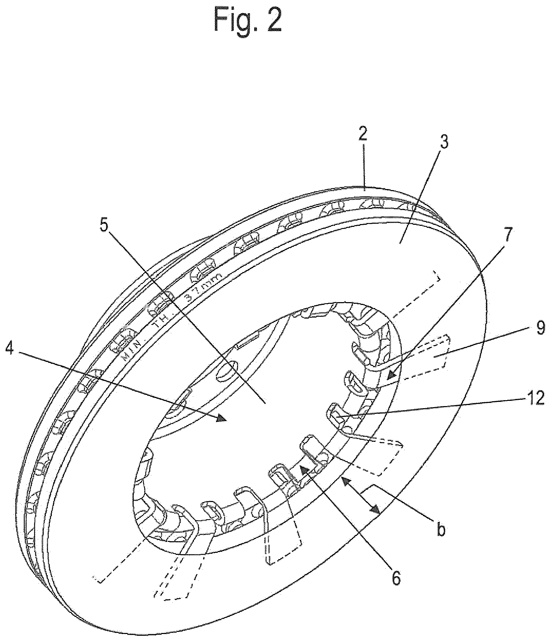

Wie in **Fig. 2** dargestellt, isst die Länge der Enden 8, 9 der Laschen 6, 7 so bemessen, dass die Enden 8, 9 der Laschen 6, 7 bevorzugt um mehr als 50 % der radialen Breite b der Reibringe 2, 3 in die Reibringe 2, 3 vorstehen.

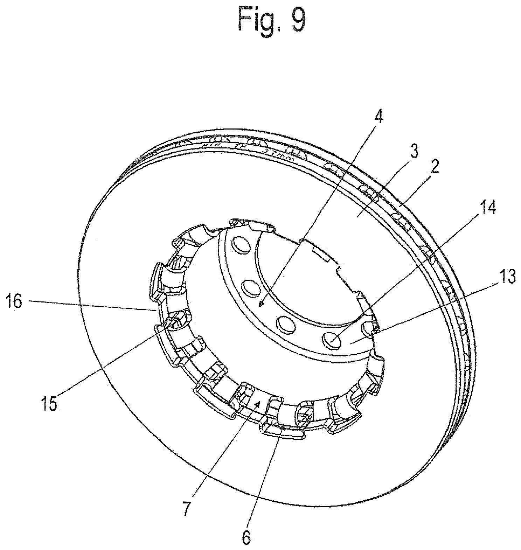

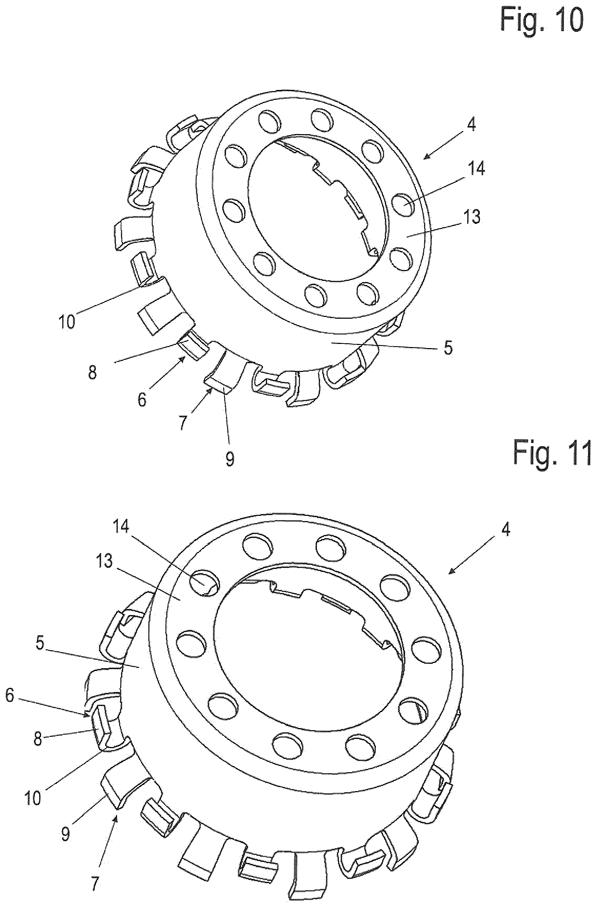

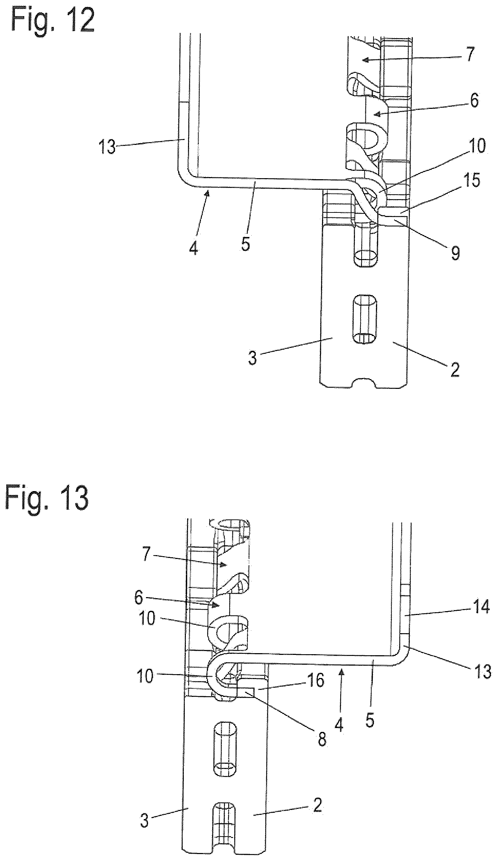

In den Fig. **9-12** ist eine alternative Ausführungsvariante einer erfindungsgemäßen Verbundbremsscheibe 1 dargestellt.

Bei dieser Ausführungsvariante sind die Enden 8, 9 der Laschen 6, 7 sich axial zur Drehachse A der Verbundbremsscheibe 1 erstreckend in die Reibringe 2, 3 eingegossen.

Auch hier sind zur Einstellung der gewünschten Steifigkeit die ersten Laschen 6 in einem Bereich zwischen der Mantelfläche 5 des Anschlusselements 4 und den in dem dem Anschlusselement 4 nahen ersten Reibring 2 aufgenommenen Enden 8 mit einer u-förmigen Biegung 10 ausgebildet.

Wie in den **Fig. 9****,** **12 und 13** gezeigt ist, sind die Enden 8, 9 der Laschen 6, 7 sich axial zur Drehachse A der Verbundbremsscheibe 1 erstreckend in ein aus dem Innenumfang der Reibringe 2, 3 radial zur Drehachse A hin vorstehendes Flanschteil eingegossen.

Dieses Flanschteil ist bei der hier gezeigten bevorzugten Ausführungsvariante in Form von mehreren abständig voneinander angeordneten Zähnen 15, 16 ausgebildet, die radial zur Drehachse A der Verbundbremsscheibe 1 in sich vom Innenumfang der Reibringe 2 weg erstrecken. Die Zähne 15 des ersten Reibrings 2 sind dabei in Umfangsrichtung der Reibringe 2, 3 betrachtet versetzt zu den Zähnen 16 des zweiten Reibrings 3 angeordnet. Dadurch können die u-förmigen Biegungen 10 der ersten Laschen 6 in die Lücken zwischen den Zähnen 16 des zweiten Reibrings 3 vorstehen.

Mit einer solchen Verbundbremsscheibe 1 ist eine Erhöhung der Lebensdauer einer Scheibenbremse für ein Nutzfahrzeug mit einer solchen Verbundbremsscheibe 1 und einem diesen übergreifenden Bremssattel sowie beidseitig der Verbundbremsscheibe 1 im Bremssattel angeordneten Bremsbelägen in kostengünstiger Weise ermöglicht.

### Bezugszeichenliste

- 1: Verbundbremsscheibe
- 2: Reibring
- 3: Reibring
- 4: Anschlusselement
- 5: Mantelfläche
- 6: Lasche
- 7: Lasche
- 8: Ende
- 9: Ende
- 10: Biegung
- 11: Sicke
- 12: Strömungslasche
- 13: Flansch
- 14: Aufnahmeöffnung
- 15: Zahn
- 16: Zahn
- 17: Rippe
- 18: Lüftungskanal

- A: Drehachse
- r_{S}: Krümmungsradius der Strömungslasche
- r_{M}: Krümmungsradius der Mantelfläche des Anschlusselements
- b: radiale Breite der Reibringe

## Patentansprüche

1. Verbundbremsscheibe (1) für eine Scheibenbremse eines Nutzfahrzeugs, aufweisend
- zwei Reibringe (2, 3),
- ein sich von einem inneren Umfang der Reibringe (2, 3) axial zu einer Drehachse (A) der Verbundbremsscheibe (1) erstreckendes, topf- oder halsförmiges Anschlusselement (4) zur Befestigung der Verbundbremsscheibe (1) an einer Radachse,
- wobei das Anschlusselement (4) eine Mantelfläche (5) aufweist, von deren einen stirnseitigen Rand sich eine Vielzahl von ersten und zweiten Laschen (6, 7) erstrecken, deren Enden (8, 9) in den Reibringen (2, 3) alternierend aufgenommen sind,
- wobei die Enden (8) der ersten Laschen (6) in einen der Mantelfläche (5) des Anschlusselements (4) nahen ersten Reibring (2) und die Enden (9) der zweiten Laschen (7) in einen der Mantelfläche (5) des Anschlusselements (4) entfernten zweiten Reibring (3) eingegossen sind,
- wobei die Laschen (6, 7) sich axial zur Drehachse (A) der Verbundbremsscheibe (1) von der Mantelfläche (5) des Anschlusselements (4) weg erstrecken,
**dadurch gekennzeichnet, dass**
- die ersten Laschen (6) in einem Bereich zwischen der Mantelfläche (5) des Anschlusselements (4) und den in dem Reibring (2) aufgenommenen Enden (8) eine u-förmige Biegung (10) aufweisen,
- wobei zumindest ein Teil der ersten und zweiten Laschen (6, 7) mit wenigstens einer Sicke (11) versehen sind.

2. Verbundbremsscheibe nach Anspruch 1, **dadurch gekennzeichnet, dass** die Sicke (11) in einem sich axial zur Drehachse (A) der Verbundbremsscheibe (1) erstreckenden Bereich der Lasche (6, 7) eingebracht ist.

3. Verbundbremsscheibe nach Anspruch 1, **dadurch gekennzeichnet, dass** die Sicke (11) sich von der Mantelfläche (5) des Anschlusselements (4) in einem sich axial zur Drehachse (A) der Verbundbremsscheibe (1) erstreckenden Bereich der Lasche (6, 7) erstreckt.

4. Verbundbremsscheibe nach einem der vorstehenden Ansprüche, **dadurch gekennzeichnet, dass** die Sicken (11) in den zweiten Laschen (7) eingebracht sind, die mit dem der Mantelfläche (5) des Anschlusselements (4) fernen zweiten Reibring (2) verbunden sind.

5. Verbundbremsscheibe nach einem der vorstehenden Ansprüche, **dadurch gekennzeichnet, dass** die Sicke (11) als im Querschnitt teilkreisförmige Auswölbung ausgebildet ist.

6. Verbundbremsscheibe nach einem der vorstehenden Ansprüche, **dadurch gekennzeichnet, dass** die Enden (8, 9) der Laschen (6, 7) sich radial zur Drehachse (A) der Verbundbremsscheibe (1) erstreckend in die Reibringe (2, 3) eingegossen sind.

7. Verbundbremsscheibe nach Anspruch 6, **dadurch gekennzeichnet, dass** die Enden der Laschen (6, 7) um mehr als 50% der radialen Breite (b) der Reibringe (2, 3) in die Reibringe (2, 3) vorstehen.

8. Verbundbremsscheibe nach einem der vorstehenden Ansprüche 1 bis 5, **dadurch gekennzeichnet, dass** die Enden (8, 9) der Laschen (6, 7) sich axial zur Drehachse (A) der Verbundbremsscheibe (1) erstreckend in die Reibringe (2, 3) eingegossen sind.

9. Verbundbremsscheibe nach einem der vorstehenden Ansprüche 1 bis 5, **dadurch gekennzeichnet, dass** die Enden (8, 9) der Laschen (6, 7) sich axial zur Drehachse (A) der Verbundbremsscheibe (1) erstreckend in ein aus dem Innenumfang der Reibringe (2, 3) radial zur Drehachse (A) hin vorstehendes Flanschteil eingegossen sind.

10. Verbundbremsscheibe nach Anspruch 9, **dadurch gekennzeichnet, dass** das Flanschteil in Form von mehreren abständig voneinander angeordneten Zähnen ausgebildet ist.

11. Verbundbremsscheibe nach einem der vorstehenden Ansprüche, **dadurch gekennzeichnet, dass** an zumindest einer der Laschen (6, 7) eine sich in Umfangsrichtung des Mantelfläche (5) des Anschlusselements (4) erstreckende Strömungslasche (12) angeordnet, insbesondere angeformt ist, wobei der Krümmungsradius (rs) der Strömungslasche (12) größer ist als der Krümmungsradius (r_{M}) des Mantelfläche (5) des Anschlusselements (4).

12. Verbundbremsscheibe nach Anspruch 11, **dadurch gekennzeichnet, dass** die Strömungslaschen (12) an den zweiten Laschen (7) angeordnet sind.

13. Scheibenbremse für ein Nutzfahrzeug, mit einer Verbundbremsscheibe (1) und einem die Verbundbremsscheibe (1) übergreifenden Bremssattel sowie beidseitig der Verbundbremsscheibe (1) im Bremssattel angeordneten Bremsbelägen, **dadurch gekennzeichnet, dass** die Verbundbremsscheibe (1) gemäß einem der vorstehenden Ansprüche ausgebildet ist.

## Claims

1. A composite brake disc (1) for a disc brake of a utility vehicle having:
- two friction rings (2, 3),
- a pot-or neck-shaped connecting element (4) that extends axially from an inner circumference of the friction rings (2, 3) to an axis of rotation (A) of the composite brake disc (1) and serves to fasten the composite brake disc (1) to a wheel axle,
- the connecting element (4) having an outer surface (5) that has extending from a front edge a plurality of first and second lugs (6, 7), the ends (8, 9) of which are alternately received in the friction rings (2, 3),
- the ends (8) of the first lugs (6) being moulded into a first friction ring (2) close to the outer surface (5) of the connecting element (4) and the ends (9) of the second lugs (7) being moulded into a second friction ring (3) distant from the outer surface (5) of the connecting element (4),
- the lugs (6, 7) extending away from the outer surface (5) of the connecting element (4) axially in relation to the axis of rotation (A) of the composite brake disc (1),
**characterised in that**
- the first lugs (6) have a u-shaped bend (10) in a region between the outer surface (5) of the connecting element (4) and the ends (8) received in the friction ring (2),
- at least some the first and second lugs (6, 7) being provided with at least one channel (11).

2. A composite brake disc according to claim 1, **characterised in that** the channel (11) is made in a region of the lug (6, 7) that extends axially in relation to the axis of rotation (A) of the composite brake disc (1).

3. A composite brake disc according to claim 1, **characterised in that** the channel (11) extends from the outer surface (5) of the connecting element (4) in a region of the lug (6, 7) that extends axially in relation to the axis of rotation (A) of the composite brake disc (1).

4. A composite brake disc according to any one of the preceding claims, **characterised in that** the channels (11) are made in the second lugs (7) that are connected to the second friction ring (2) distant from the outer surface (5) of the connecting element (4).

5. A composite brake disc according to any one of the preceding claims, **characterised in that** the channel (11) takes the form of a bulge with a cross section shaped like part of a circle.

6. A composite brake disc according to any one of the preceding claims, **characterised in that** the ends (8, 9) of the lugs (6, 7) are moulded into the friction rings (2, 3) so as to extend radially in relation to the axis of rotation (A) of the composite brake disc (1).

7. A composite brake disc according to claim 6, **characterised in that** the ends of the lugs (6, 7) project into the friction rings (2, 3) by more than 50% of the radial width (b) of the friction rings (2, 3).

8. A composite brake disc according to any one of the preceding claims 1 to 5, **characterised in that** the ends (8, 9) of the lugs (6, 7) are moulded into the friction rings (2, 3) so as to extend radially in relation to the axis of rotation (A) of the composite brake disc (1).

9. A composite brake disc according to any one of the preceding claims 1 to 5, **characterised in that** the ends (8, 9) of the lugs (6, 7) are moulded into a flange part that projects radially from the inner circumference of the friction rings (2, 3) towards the axis of rotation (A) so as to extend radially in relation to the axis of rotation (A) of the composite brake disc (1).

10. A composite brake disc according to claim 9, **characterised in that** the flange part takes the form of a plurality of teeth that are arranged spaced apart from one another.

11. A composite brake disc according to any one of the preceding claims, **characterised in that** arranged on, in particular integrally moulded onto, at least one of the lugs (6, 7) is a flow lug (12) that extends in the circumferential direction of the outer surface (5) of the connecting element (4), the radius of curvature (r_{S}) of the flow lug (12) being greater than the radius of curvature (r_{M}) of the outer surface (5) of the connecting element (4).

12. A composite brake disc according to claim 11, **characterised in that** the flow lugs (12) are arranged on the second lugs (7).

13. A disc brake for a utility vehicle having a composite brake disc (1), a brake calliper that spans the composite brake disc (1) and brake pads that are arranged on either side of the composite brake disc (1) in the brake calliper, **characterised in that** the composite brake disc (1) is designed according to any one of the preceding claims.

## Revendications

1. Disque (1) de frein composite d'un frein à disque d'un véhicule utilitaire, comportant
- deux anneaux (2, 3) de friction,
- un élément (4) de raccordement en forme de pot ou de col, s'étendant d'un pourtour intérieur des anneaux (2, 3) de friction, axialement à un axe (A) de rotation du disque (1) de frein composite, pour fixer le disque (1) de frein composite à un essieu,
- dans lequel l'élément (4) de raccordement a une surface (5) latérale, du bord du côté frontal de laquelle s'étendent une pluralité de premières et deuxièmes languettes (6, 7), dont les extrémités sont reçues en alternance dans les anneaux (2, 3) de friction,
- dans lequel les extrémités (8) des premières languettes (6) sont coulées dans un premier anneau (2) de friction, proche de la surface (5) latérale de l'élément (4) de raccordement, et les extrémités (9) des deuxièmes languettes (7) sont coulées dans un deuxième anneau (3) de friction, loin de la surface (5) latérale de l'élément (4) de raccordement,
- dans lequel les languettes (6, 7) s'éloignent, axialement par rapport à l'axe (A) de rotation du disque (1) de frein composite, de la surface (5) latérale de l'élément (4) de raccordement,
**caractérisé en ce que**
- les premières languettes (6) ont, dans une partie comprise entre la surface (5) latérale de l'élément (4) de raccordement et les extrémités (8) reçues dans l'anneau (2) de friction, un coude (10) en forme de u,
- dans lequel au moins une partie des premières et deuxièmes languettes (6, 7) sont pourvues d'au moins une nervure (11).

2. Disque de frein composite suivant la revendication 1, **caractérisé en ce que** la nervure (11) est ménagée dans une partie de la languette (6, 7), s'étendant axialement par rapport à l'axe (A) de rotation du disque (1) de frein composite.

3. Disque de frein composite suivant la revendication 1, **caractérisé en ce que** la nervure (11) s'étend à partir de la surface (5) latérale de l'élément (4) de raccordement, dans une partie de la languette (6, 7), s'étendant axialement par rapport à l'axe (A) de rotation du disque (1) de frein composite.

4. Disque de frein composite suivant l'une des revendication précédentes, **caractérisé en ce que** les nervures (11) sont ménagées dans les deuxièmes languettes (7), qui sont reliées au deuxième anneau (2) de friction, loin de la surface (5) latérale de l'élément (4) de raccordement.

5. Disque de frein composite suivant l'une des revendications précédentes, **caractérisé en ce que** la nervure (11) est constituée sous la forme d'un cintrage en forme de partie de cercle en section transversale.

6. Disque de frein composite suivant l'une des revendications précédentes, **caractérisé en ce que** les extrémités (8, 9) des languettes (6, 7) sont coulées dans les anneaux (2, 3) de friction, en s'étendant radialement par rapport à l'axe (A) de rotation du disque (1) de frein composite.

7. Disque de frein composite suivant la revendication 6, **caractérisé en ce que** les extrémités des languettes (6, 7) sont en saillie dans les anneaux (2, 3) de friction de plus de 50% de la largeur (b) radiale des anneaux (2, 3) de friction.

8. Disque de frein composite suivant l'une des revendications 1 à 5 précédentes, **caractérisé en ce que** les extrémités (8, 9) des languettes (6, 7) sont coulées dans les anneaux (2, 3) de friction, en s'étendant axialement par rapport à l'axe (A) de rotation du disque (1) de frein composite.

9. Disque de frein composite suivant l'une des revendications 1 à 5 précédentes, **caractérisé en ce que** les extrémités (8, 9) des languettes (6, 7) sont, en s'étendant axialement par rapport à l'axe (A) de rotation du disque (1) de frein composite, coulées dans une partie de bride en saillie radialement par rapport à l'axe (A) de rotation du pourtour intérieur des anneaux (2, 3) de friction.

10. Disque de frein composite suivant la revendication 9, **caractérisé en ce que** la partie de bride est constituée sous la forme de plusieurs dents, disposées à distance les unes des autres.

11. Disque de frein composite suivant l'une des revendication précédentes, **caractérisé en ce que**, sur au moins l'une des languettes (6, 7), est disposée une languette (12) d'écoulement, s'étendant dans la direction du pourtour de la surface (5) latérale de l'élément (4) de raccordement, en en venant notamment de matière, le rayon (rs) de courbure de la languette (12) d'écoulement étant plus grand que le rayon (r_{M}) de courbure de la surface (5) latérale de l'élément (4) de raccordement.

12. Disque de frein composite suivant la revendication 11, **caractérisé en ce que** les languettes (12) d'écoulement sont disposées sur les deuxièmes languettes (7).

13. Frein à disque d'un véhicule utilitaire, comprenant un disque (1) de frein composite et un étrier de frein chevauchant le disque (1) de frein composite, ainsi que des garnitures de frein montées dans l'étrier de frein des deux côtés du disque (1) de frein composite, **caractérisé en ce que** le disque (1) de frein composite est constitué suivant l'une des revendications précédentes.
